# EUROPEAN PATENT SPECIFICATION

(11) **EP 1 121 820 B1**
(45) Date of publication and mention of the grant of the patent: **04.05.2005**
(21) Application number: 99949032.9
(22) Date of filing: 11.10.1999
(51) Int. Cl.: H04Q 7/24

(54) **DATA TRANSMISSION RESOURCES OPTIMIZATION**
OPTIMIERUNG VON DATENÜBERTRAGUNGSRESSOURCEN
OPTIMISATION DE RESSOURCES DE TRANSMISSION DE DONNEES

(30) Priority: 13.10.1998 FI 982222
(43) Date of publication of application: 08.08.2001
(73) Proprietor: Nokia Corporation, 02150 Espoo (FI)
(72) Inventor: KANGAS, Arto, FIN-02320 Espoo (FI); JUPPI, Anssi, FIN-00700 Helsinki (FI); RÄSÄNEN, Juha, FIN-02660 Espoo (FI)
(74) Representative: Äkräs, Tapio Juhani
(86) International application number: PCT/FI1999/000840
(87) International publication number: WO 2000/022854

(56) References cited:
- WO-A1-97/23110
- WO-A2-96/10320

## Description

### BACKGROUND OF THE INVENTION

The invention relates to the optimization of the use of data transmission resources in a data call, and particularly to the optimization of the use of traffic channels on the air interface of high speed data transmission services based on multichannel technology.

Modern mobile communication systems provide subscribers with both normal speech transmission and various data transmission functions. In mobile communication systems, the available data transmission capacity on the air interface is divided between several users by a multiple access principle. The most common multiple access principles include time division multiple access (TDMA), code division multiple access (CDMA) and frequency division multiple access (FDMA). In TDMA systems, communication over a radio path takes place on a time division basis in successive recurrent TDMA frames, each of which comprises several time slots. Time slots are mainly used for transferring control channels and traffic channels. Traffic channels are used for transmitting speech and data. In this application, data refers to any information conveyed in a digital telecommunication system. Such information may comprise digitized speech, inter-computer data communication, telefax data, short program code segments etc. Control channels are used for signalling between a base transceiver station and mobile stations. An example of a TDMA radio system is the pan-European mobile system GSM (Global System for Mobile Communications).

Depending on the data transmission rate required, a traffic channel may comprise one subchannel (e.g. a TDMA time slot) or many subchannels (e.g. many TDMA time slots for a high speed data transmission) in modem mobile communication systems. For example in the GSM system, a high speed data service HSCSD (High Speed Circuit Switch Data) is defined, in which data service a traffic channel may comprise several subchannels. Channels and subchannels can be allocated symmetrically or asymmetrically. Correspondingly, a high speed data service has been planned for e.g. the third-generation mobile communication systems, such as the UMTS (Universal Mobile Telecommunication System) and the IMT-2000 (International Mobile Telecommunication 2000). Also in professional mobile radio systems, e.g. the TETRA (Terrestrial Trunked Radio), it is possible to allocate several subchannels to one connection. The user data transmission rate on the air interface is affected by the number of subchannels and also the used channel coding method.

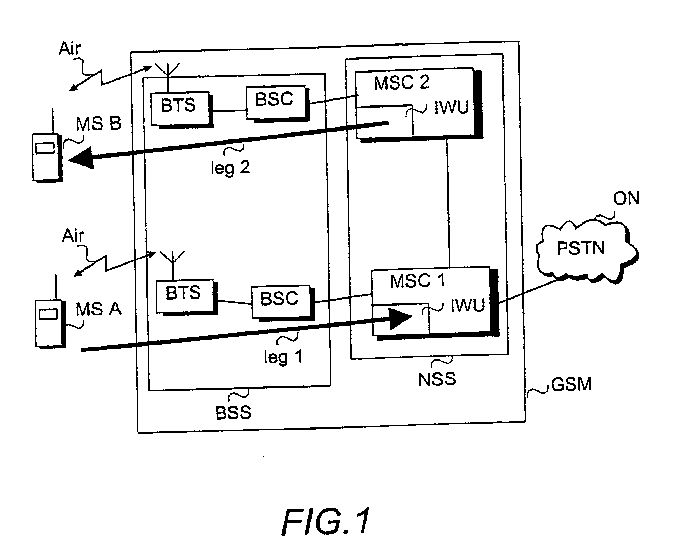

Figure 1 shows one possible data transmission situation in the GSM system. In the example of Figure 1, a data transmission call is a call between two mobile stations. When a mobile station MS A makes a data transmission call to a mobile station MS B, a leg 1 is formed for the call, i.e. the connection, between the mobile station MS A and a serving mobile services switching centre MSC 1. Correspondingly, a leg 2 is formed for the same connection between the mobile station MS B and a serving mobile services switching centre MSC 2. For both legs 1 and 2, the number of subchannels required by the data transmission rate is allocated. One leg is not aware of the situation of the other leg, although both legs were served by the same mobile services switching centre. When e.g. the data transmission rate of the call leg 1 on the air interface Air varies e.g. due to the upgrade, i.e. the increase in the number of subchannels, or the downgrade, i.e. the decrease in the number of subchannels, the leg 2 does not follow. As a result of upgrading the leg 1, the mobile station MS A may thus uselessly allocate subchannels from the air interface, which subchannels it is unable to use because of the poorer data transmission rate of the leg 2. Correspondingly, as a result of downgrading the leg 1, the mobile station MS B may allocate subchannels from the air interface uselessly, which subchannels it is unable to use due to the decreased data transmission rate of the leg 1. The situation remains the same, whether the mobile stations MS A and MS B are served by the same or a different mobile services switching centre.

A problem in the arrangement described above is that the air interface cannot be utilized in the most efficient way, because the information on the data transmission rate change of one leg is not conveyed to the other leg of the same connection. The efficient utilization of the radio spectrum is the main factor in planning and implementing mobile communication networks.

The inefficient use of traffic channels may present a problem in a call between a mobile station and a fixed network as well. A fixed network part can offer (e.g. due to an autobauding handshaking of modems or the used fixed network protocol) a data rate much higher or much lower than requested in the call set-up. A problem may also be provisory, caused by the quality of the connection or the network.

In fixed network calls, too, the inefficient use of traffic channels may present a problem. For example, when transferring data in a broadband network between two narrowband ISDN networks, several time slots can be allocated to the connection in the network side, when the data transmission rate in different ISDN network sides is not necessarily the same and the resources on the other side can be wasted.

WO 97/23110 relates to implementing a method for a handover between mobile switching centres of a cellular mobile network in high-speed data transmission wherein several channels are allocated to a mobile station. In the method, the first mobile switching centre indicates to the second mobile switching centre at least the minimum number of channels required over the connection. The second mobile switching centre attempts to allocate at least the indicated minimum number of channels. The second mobile switching centre transmits to the first mobile switching centre data about the channels it has allocated and at least one handover number. The first mobile switching centre may use the same handover number to perform a handover to each subchannel.

### BRIEF DESCRIPTION OF THE INVENTION

It is thus an object of the invention to provide a method and an apparatus implementing the method to eliminate the above problems. The object of the invention is particularly to utilize the available channel capacity as efficiently as possible. The objects of the invention are achieved by a method, a system and an interworking unit which are characterized by what is said in the independent claims. The preferred embodiments of the invention are disclosed in the dependent claims. An interworking unit refers herein to any network element with an interworking function in a data transmission network.

The invention is based on the network adapting the traffic channel resources between the mobile station and the network to the outward connection of the network element, e.g. the connection to another mobile station or to the fixed network, by observing and comparing the data transmission capacity of connection parts or by receiving information from the outward connection on its data transmission capacity.

The method, system and interworking unit of the invention provide the advantage of using traffic channels, e.g. radio channels, efficiently in multichannel calls. In respect of the capacity of the whole end-to-end connection, there is always an adequate amount of channels allocated. The method provides a user with the highest possible data rate with the lowest possible costs. For the network operator, the method offers network resources measuring and optimization and a service with a better price-quality ratio for users.

In a preferred embodiment of the invention, the capacity allocated from the data transmission resources is controlled by the amount of padding transmitted over the connection and by flow control. This provides the advantage that the information on the capacity of one end need not be separately transmitted, because it can be concluded on the basis of the amount of padding and the flow control. Further, the real need for the capacity will be found out and the capacity will be adapted to it.

In another preferred embodiment of the invention, the capacity allocated from the data transmission resources is controlled by the amount of padding transmitted over the connection and the need for buffering. Also this provides the advantage that the information on the capacity of one end need not be separately transmitted, because it can be concluded on the basis of the amount of padding and the need for buffering. Further, the real need for the capacity will be found out and the capacity will be adapted to it.

In a preferred embodiment of the invention, in which the connection is a connection between mobile stations, the air interface capacities are arranged to correspond to each other by conveying information on the capacity allocated from the air interface to the other mobile station. This provides the advantage that the capacity for the same data transmission rate is allocated to both mobile stations participating in the same call from the air interface.

### BRIEF DESCRIPTION OF THE FIGURES

In the following the invention will be described in greater detail in connection with the preferred embodiments, with reference to the attached drawings, in which
Figure 1 illustrates different legs of the same connection,
Figure 2 shows a signalling diagram in the first preferred embodiment of the invention, and
Figures 3 and 4 show the operation according to the second preferred embodiment of the invention as a flow chart.

### DETAILED DESCRIPTION OF THE INVENTION

The present invention can be applied both to telecommunication systems based on a fixed network and to all digital wireless telecommunication systems, such as cellular systems, WLL-type (Wireless Local Loop) and RLL-type (Radio Local Loop) networks and satellite-based mobile communication systems. The invention is particularly applicable to optimize the use of the resources on the air interface in a mobile communication system, as the resources on the air interface are limited. In this connection, the term 'mobile communication system' (or network) refers generally to all wireless telecommunication systems. There are several multiple access modulation techniques to facilitate the communication with a plurality of mobile users. These techniques include time division multiple access (TDMA), code division multiple access (CDMA) and frequency division multiple access (FDMA). The physical concept of a traffic channel varies in different multiple access methods, and it is primarily defined by means of a time slot in TDMA systems, a spreading code in CDMA systems, a radio channel in FDMA systems, a combination of these etc. In modern mobile communication systems, it is possible to allocate a set of two or more basic-rate traffic channels (subchannels), or a so-called high speed traffic channel, to a mobile station for high speed data transmission. In this connection, the term 'traffic channel' refers both to a single basic-rate traffic channel and to a high speed traffic channel consisting of two or more basic-rate traffic channels (subchannels). The basic idea of the present invention is independent of the type of the traffic channel and the multiple access method used.

In the following the invention will be described by using the GSM system as an example without restricting the invention to this system in any way. The structure and operation of the GSM system are known to a person skilled in the art. The basic structure of the GSM system comprises a base station subsystem BSS and a network subsystem NSS. The BSS and the mobile stations MS communicate over radio connections via the air interface Air. In the base station system BSS each cell is served by a base transceiver station BTS. A number of base transceiver stations are connected to a base station controller BSC, which controls the radio frequencies and channels the BTS uses. The BSCs are connected to a mobile services switching centre MSC. Certain mobile services switching centres are connected to other telecommunication networks ON, such as the public switched telephone network PSTN or a data network, and they comprise gateway functions for calls originating from and terminating at those networks. These centres MSC are known as gateway MSCs (GMSC). Further, there are at least two databases, a home location register HLR and a visitor location register VLR.

The mobile communication system comprises adaptation functions to adapt the internal data connection of the mobile communication network to the protocols used by terminals and other telecommunication networks. Typical adaptation functions include a terminal adaptation function TAF (not shown in Figure 1) on the interface between a mobile station and a data terminal connected to the mobile station, and an interworking function IWF on the interface between a mobile communication network and another telecommunication network, usually in connection with a mobile services switching centre. In the example of Figure 1, an interworking unit IWU including the interworking function IWF is located in the mobile services switching centres MSC 1 and MSC 2. Alternatively, an IWU can be located in some other network element or as an independent element. In this application, the term 'interworking unit' refers thus to a network element comprising an interworking function.

Usually a mobile services switching centre comprises various types of adapter equipment pools for supporting different data services and data protocols, e.g. a modem pool with modems and telefax adapters for modem and telefax services, an UDI/RDI rate adapter pool etc.

In the GSM system, a data connection is established between the terminal adaptation function TAF of the mobile station MS and the interworking function IWF in the mobile communication network. Said GSM data connection is established over the physical connection using one or more traffic channels on the air interface. The IWF switches the GSM data connection to another network, such as the ISDN or another GSM network, or to the public switched telephone network PSTN. If one party of the data connection is a terminal in a fixed network, e.g. the PSTN, the leg 2 is formed between the interworking function of the gateway mobile services switching centre and the terminal. The interworking functions, e.g. the IWF, take care of bearer services, by which e.g. technical prerequisites for switching functions are created for teleservices. A bearer service can guarantee a specific, even as high as 64 kbit/s, user rate on the air interface. The interworking function IWF buffers data packets and performs the flow control. How the flow control and the buffering is performed has no relevance to the present invention, and thus it is not described in greater detail herein.

Data traffic between the MSC/IWU and the base transceiver station is transparent, and the present invention does not affect the operation of other network elements, such as base station controllers BSC or base transceiver stations BTS.

In addition to prior art means needed for data transmission services, the mobile communication system implementing the functionality of the present invention comprises means for adapting the traffic channel capacity on the air interface to correspond to the traffic channel capacity on the air interface of another mobile station in the same data transmission connection, or to the channel capacity of the fixed network used by the connection. The means are preferably located in connection with the call control of the mobile services switching centre or in connection with the interworking unit. The means or part of the means can also be located somewhere else.

The network structure requires no equipment changes. It comprises processors and memory, which can be utilized in the functions according to the invention. All changes needed for implementing the invention can be performed as added or updated software routines to accomplish the functionality of the invention. Depending on the embodiment of the invention, memory extension may be needed. It is, however, restricted to a small amount which is enough to store excess resource allocation information, i.e. the information on the capacity of each leg.

The term 'capacity' refers herein to a traffic channel on the air interface allocated to a leg and channel coding used therein, which determine the user data transmission rate on the air interface.

In the following, the invention will be described according to the preferred embodiments. How traffic channels and their subchannels and the used channel codings are allocated and how the allocations are changed during the connection, have no relevance to the invention, and thus they are not described in greater detail. It is equally irrelevant to the invention, how the order of data is maintained in multichannel transmission, and so it will not be described in greater detail either.

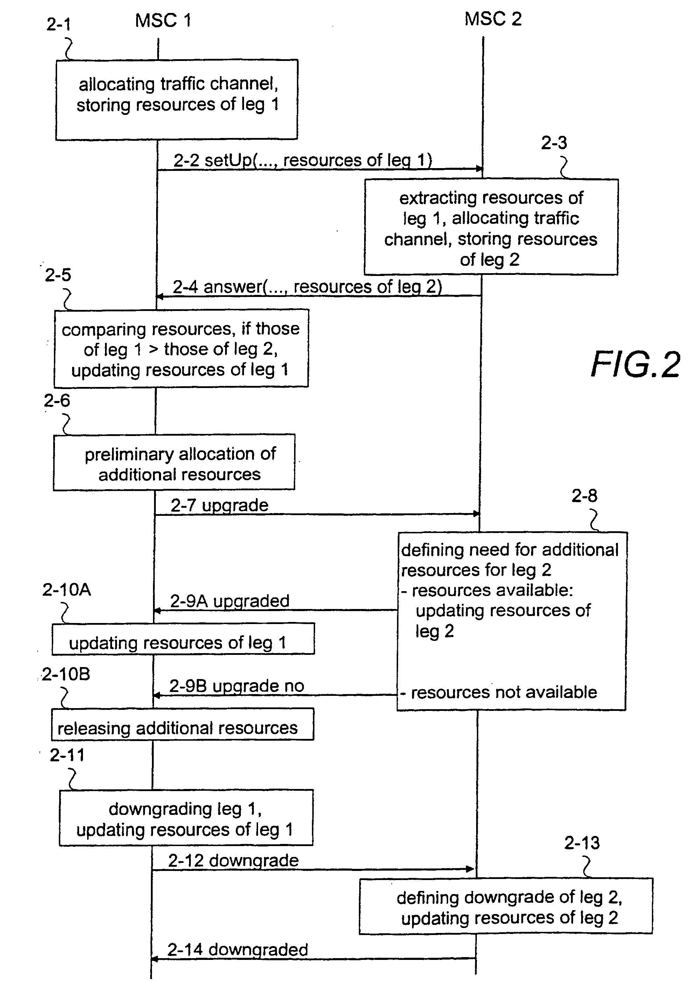

Figure 2 illustrates signalling according to the first preferred embodiment of the invention. In the first preferred embodiment of the invention, leg-specific channel allocation information of the connection is maintained in the mobile services switching centre. In the example of Figure 2, two mobile stations under different switching centres participate in the call. If mobile stations are under the same switching centre, the signalling in Figure 2 represents internal signalling of the switching centre. In other words, the mobile services switching centre MSC 1 shows a call process taking care of the leg 1 and the MSC 2 shows a call process taking care of the leg 2. Their physical location may change during the connection because of the handover between switching centres performed by the mobile station. It is further assumed that in the used channel allocation method a slower connection is established, if the amount of resources required by the desired data transmission rate is not available.

At step 2-1, the mobile services switching centre MSC 1 has received a call set-up request to the mobile station B from the mobile station A. The call set-up request includes the data transmission rate requested for the connection, on the basis of which data transmission rate the mobile services switching centre MSC 1 allocates the traffic channel to the connection and forms a leg 1. At the same time, the mobile services switching centre stores the information on the connection and the resources allocated on the air interface to the leg 1 of the connection. The information on the resources allocated to the connection is indicated for example in the form of the amount of the allocated subchannels and the used channel coding and/or the user data transmission rate on the air interface.

Then the mobile services switching centre MSC 1 routes the call set-up request to the mobile services switching centre MSC 2 serving the mobile station B and transmits the call set-up request (setUp) in the message 2-2. In the first preferred embodiment of the invention, both the normal parameters and the information on the resources allocated to the leg 1 on the air interfaces are added to the call set-up request.

Thereafter, the mobile services switching centre MSC 2 extracts also the information on the resources allocated to the leg 1 from the call set-up request. The mobile services switching centre MSC 2 allocates the traffic channel to the leg 2 of the connection preferably to correspond to the resources allocated to the leg 1 at step 2-3. If the mobile services switching centre MSC 2 has not enough subchannels available, less resources are allocated to the leg 2 than it has been allocated to the leg 1. In the first preferred embodiment of the invention, however, no more resources are allocated to the leg 2 than to the leg 1. As the traffic channel has been allocated, the mobile services switching centre MSC 2 stores the information on the resources allocated to the leg 2 at step 2-3. Then the mobile services switching centre MSC 2 transmits an answer message (2-4) to the call set-up request. In the first preferred embodiment, the answer includes the information on the resources allocated to the leg 2. In some other embodiments, the message 2-4 includes the information on the resources allocated to the leg 2 only when it could not be allocated as much resources to the leg 2 as to the leg 1.

Upon receiving the message 2-4, the mobile services switching centre MSC 1 extracts the information on the resources allocated to the leg 2 from the message at step 2-5 and compares them with the resources allocated to the leg 1. If the resources allocated to the leg 2 are smaller than the resources allocated to the leg 1, the mobile services switching centre MSC 1 preferably releases part of the resources allocated to the leg 1 in such a manner that the resources of both legs correspond to each other, and updates the information on the resources allocated to the leg 1 to correspond to the changed situation. This provides the advantage that the resources on the air interface of both sides are able to convey data with the same transmission rate in such a manner that the need for the flow control and the buffering is minimized and that the resources are not uselessly allocated on either of the air interfaces.

When the resources on the air interface allocated to both legs 1 and 2 correspond to each other and the connection is established, the mobile services switching centres start monitoring the traffic of the legs allocated to the connection. In the following it is exemplarily assumed that both the upgrade and the downgrade are performed for the leg 1.

At step 2-6, it is aimed at upgrading the leg 1. The decision on the need for upgrading is made according to the prior art. Differing from the prior art, in the first preferred embodiment of the invention the excess resources are preliminarily allocated to the leg 1 at step 2-6 and the message 2-7 informing about the need for upgrading is transmitted to the mobile services switching centre MSC 2. The message 2-7 includes the information on how much the amount of resources allocated to the leg 1 would be upgraded. It is expressed either directly by announcing the desired amount of additional resources or the desired total amount of the resources of the leg 1. Upon receiving it, the mobile services switching centre MSC 2 defines the information on the additional resources needed for the leg 2 and checks whether it has said amount of additional resources available at step 2-8. If there are resources available, the mobile services switching centre MSC 2 allocates them to the leg 2, updates the information on the resources allocated to the leg 2 to correspond to the new situation and transmits the acknowledgement of the upgrade in the message 2-9A. The message either includes the information on how big the upgrade was or the information on the resources allocated to the leg 2 after the upgrade. This provides the advantage that if all the desired additional resources cannot be allocated to the leg 2, the upgrade procedure can however be performed and the amount of resources in both legs is the same. Upon receiving the message 2-9A, the mobile services switching centre MSC 1 allocates the amount of additional resources to the leg 1 as expressed in the message 2-9A and updates the information on the resources allocated to the leg 1 at step 2-10A.

In some other embodiment, in which not so much resources can be allocated to the leg 2 as it is desired, additional resources are not allocated, but it is acted as if there were no resources available.

If the mobile services switching centre MSC 2 detects at step 2-8 that no resources are available, it transmits the information forbidding the up-grade to the mobile services switching centre MSC 1 in the message 2-9B. In this case, the mobile services switching centre MSC 1 preliminarily releases the additional resources allocated to the leg 1 at step 2-10B and does not perform the upgrade procedure. This provides the advantage that such resources that cannot be used because of the smaller resources on the air interface of the second leg are not uselessly allocated on the air interface of the first leg.

In some embodiments, the mobile services switching centre MSC 2 may stay and observe its resource situation after transmitting the message 2-9B and when it detects that resources are being released, it can for its part transmit a message 2-8 requesting the upgrade procedure to the mobile services switching centre MSC 1.

At step 2-11, the leg 1 is downgraded. The decision on the need for downgrading is made according to the prior art. Differing from the prior art, in the first preferred embodiment of the invention the resource information of the leg 1 is updated at step 2-11 and the message 2-12 reporting on the downgrade is transmitted to the mobile services switching centre MSC 2. The message 2-12 includes the information on how much the amount of resources allocated to the leg 1 was downgraded. It is expressed either directly by the decreased amount of resources or by the total amount of resources of the leg 1 after the downgrade procedure. Upon receiving the message 2-12 the mobile services switching centre MSC 2 defines, at step 2-13, the information on the required reduction in resources for the leg 2, releases the useless resources and updates the information on the resources allocated to the leg 2 to correspond to the new situation. Then it transmits the acknowledgement of the downgrade in the message 2-14. The message may be a simple acknowledgement message or it can include the information either on how big the downgrade was or on the resources allocated to the leg 2 after the downgrade procedure.

In some other embodiments, the information on the resources on the air interface is not yet added to the message 2-2 but it is transmitted as a separate message after the call set-up. The information on the resources on the air interface allocated to the connection can first be transmitted from the leg 1, i.e. the mobile services switching centre MSC 1, to the leg 2, i.e. the mobile services switching centre MSC 2, which compares the resources with each other. If the resources of the leg 2 are bigger than those of the leg 1, the mobile services switching centre MSC 2 releases resources allocated to the leg 2 to correspond to the resources of the leg 1. If the resources of the leg 1 are bigger than those of the leg 2, the mobile services switching centre MSC 2 preferably transmits the information on the resources allocated to the leg 2 to the mobile services switching centre MSC 1, after which the mobile services switching centre MSC 1 compares the resources and releases a part of the resources allocated to the leg 1. The information on the resources allocated to the leg is updated. It is also possible that the mobile services switching centres transmit the information on the resources allocated to their own leg on the air interface to each other. Then, the mobile services switching centre in which more resources may have been allocated, releases the excess resources.

In some other embodiment of the invention, mobile services switching centres may transmit the information to the other mobile services switching centre always when the utilization ratio of the allocated resources changes. Then the other mobile services switching centre can conclude whether it is worthwhile to upgrade or downgrade its own leg, and if it is, with what amount it is to be done.

The steps and signalling messages described above in Figure 2 are not in an absolute chronological order and part of the steps can be performed simultaneously or as differing from the described order. The signalling messages are only illustrative and may also include several separate messages to convey the same information. Further, messages may also include other information. Messages can also be freely combined or divided into several parts. For example, the upgrade procedure may be performed by asking a permission, getting the permission, allocating additional resources, transmitting the information on the allocation of the additional resources, allocating the additional resources to the other leg and transmitting the information on that. It is essential in the first preferred embodiment that the information on the allocation situation of different legs is exchanged always when the allocation situation changes. Without this information, the allocation situation of one leg cannot be adapted to correspond to the resources allocated to the other leg. Each mobile services switching centre concludes independently, how to adapt its own situation on the basis of the resource situation of the other. Depending on the network structure, other network elements to which various functionalities have been distributed can also participate in signalling and conveying the information.

It is obvious for a person skilled in the art how the above described method is applied to a data call with several participating mobile stations.

Although it is assumed above for the sake of clarity that the channels on the air interface are allocated symmetrically, the invention can also be applied when using asymmetrical channel allocation. For example, the steps described above in Figure 2 can be carried out separately for an uplink transmission path and a downlink transmission path. Alternatively, the information on the resource situation of both directions of the leg or the need for changing the situation can always be included in messages. Then it has to be remembered that the uplink transmission path of the leg 1 has to be adapted to the downlink transmission path of the leg 2. Correspondingly, the downlink transmission path of the leg 1 has to be adapted to the uplink transmission path of the leg 2.

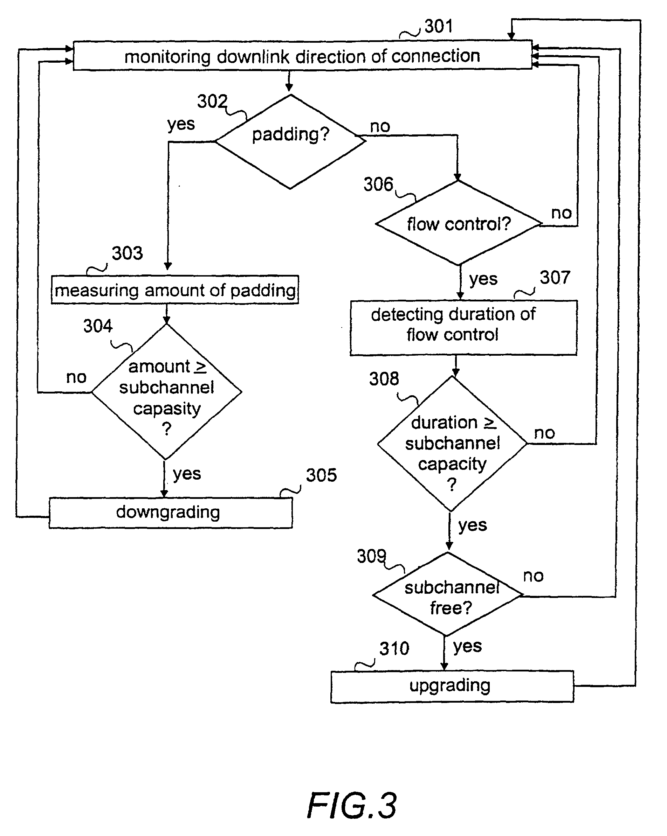

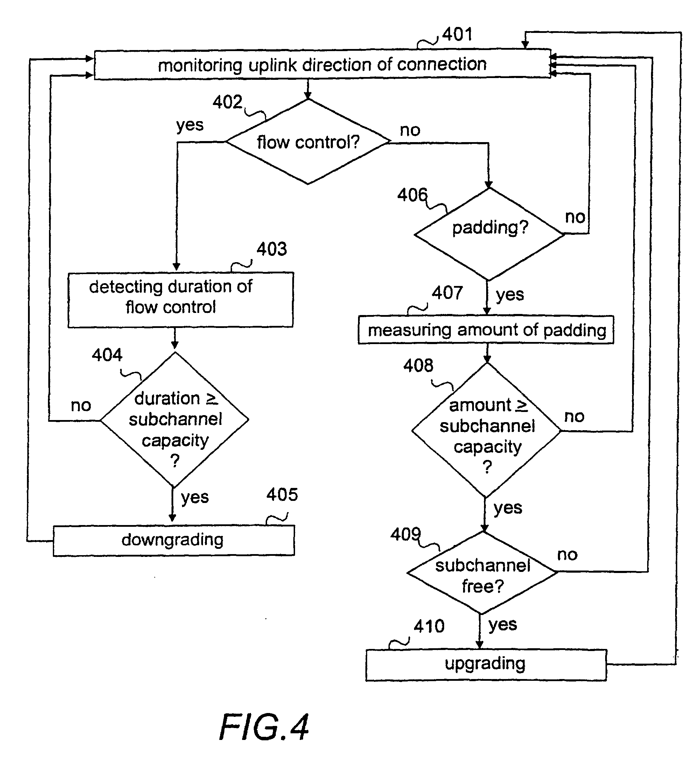

Figures 3 and 4 show the operation according to the second preferred embodiment of the invention. In the second preferred embodiment of the invention, separate signalling is not needed, but the interworking unit observes data traffic to the uplink and downlink directions in each connection. The connection is divided into two connection parts. The first connection part exists between the mobile station and the interworking unit. The second connection part exists between the interworking unit and the other party of the data connection. The other party can be a mobile station or a terminal in a fixed network. The difference in the transmission rate between these connection parts can be detected by observing. In the second preferred embodiment of the invention, the invention is also applicable to a call between apparatuses in two different systems, e.g. between a mobile station and a fixed network. Figure 3 illustrates the observation and adaptation of the resources on the downlink traffic channel. Correspondingly, Figure 4 illustrates the observation and adaptation of the resources on the uplink traffic channel. In the examples of Figures 3 and 4, the adaptation of the capacity on the air interface is based on the detection of padding and/or flow control during monitoring. Alternatively, e.g. the amount of padding and the filling degree of the buffer can be monitored. Monitoring helps to detect the difference in the data transmission rates of the connection parts, and thus of the whole connection. The appearance of padding or flow control in the payload flow or the buffering of the payload flow are events indicating differences in the capacity of the connection. A difference in the capacity refers both to a difference in the use of the capacity, i.e. different transmission rates of payload, and to a difference between the amounts of various capacities. By defining the "extent" of the event, the difference between the connection parts can be concluded. The extent of padding is defined by measuring its amount, the extent of flow control is defined by its duration and the extent of buffering is defined by the filling degree of the buffer or the filling rate of the buffer.

Figure 3 starts with the situation after the call set-up. At step 301, the downlink direction of the connection is monitored. In other words, the output and input channels of the downlink direction are monitored in the interworking unit. At step 302 it is checked whether padding (fill frames, Receiver Ready frames etc.) is transmitted in the outgoing direction, i.e. in the direction of the mobile station. The transmission of padding may indicate that too much capacity on the air interface is allocated. If it is detected at step 302 that padding is going to the output channel, the amount of padding transmitted in the direction of the mobile station is measured at step 303. At step 304 the amount of the padding to be transmitted is compared with the subchannel capacity. In other words, it is checked how much padding is to be transmitted in regard to the subchannel capacity. It is thus detected how much padding there is in the transmission compared to the smallest stage of change in the capacity. The smallest stage of change is preferably the capacity of one subchannel. The stage of change can also be defined as being of a different size. On the basis of the comparison at step 304 it is detected whether in addition to the payload, the padding has to be transmitted so much that the channel capacity could be decreased without slowing down or significantly slowing down the payload transmission.

If too much capacity, i.e. at least the capacity of one subchannel, is allocated to the downlink direction, (and thus the condition of step 304 is fulfilled), the capacity allocated to the connection is decreased by the downgrade procedure performed at step 305. In the second preferred embodiment, one subchannel is downgraded at a time. It would be possible to downgrade more subchannels at one time, if the amount of padding were equal to at least the combined capacity of the subchannels to be "released". After the downgrade procedure, it is returned to step 301 to monitor the downlink direction of the connection. It is returned to step 301 straight from step 304, if the amount of padding is not equal to at least the amount of the subchannel capacity.

If it is detected at step 302 that the padding need not be transmitted, i.e. the amount of data needs all allocated capacity, it is detected at step 306 whether the input channel, i.e. the trunk circuit, needs the flow control in the example of Figure 3. The need for flow control may indicate that too little capacity on the air interface is allocated. If the flow control is not needed, it is returned to step 301 to monitor the downlink direction.

If the flow control is needed, the duration of the flow control is detected at step 307. Then, the duration of the flow control is compared with the subchannel capacity at step 308. This way it is detected whether the duration of the flow control during the measurement period is so long that the additional capacity could be used for transferring payload. For example, if the flow control is active half the time, the channel capacity could be doubled.

If it is detected at step 308 that the extent of the flow control duration is not equal to the subchannel capacity (i.e. the size of the smallest stage of change), it is returned to step 301 to monitor the downlink direction of the connection.

If it is detected at step 308 that the duration of the flow control is at least equal to the subchannel capacity, it is checked at step 309, whether there are resources, i.e. a subchannel (or subchannels), available on the air interface. If there are no resources available on the air interface, it is returned to step 301 to monitor the downlink direction of the connection.

If it is detected at step 309 that there are resources available on the air interface, the upgrade procedure is performed at step 310 and the required amount of subchannels is allocated. Then it is moved to step 301 to monitor the downlink direction of the connection.

In the embodiments, in which the events indicating the difference in the capacity are the transmission of padding and the buffering of data flow, steps 306, 307 and 308 change in Figure 3. At step 306, the need for buffering is checked. If it is not needed, it is moved to step 301. If the buffering is needed, the filling degree or the filling rate of the data buffer is detected at step 307. At step 308 it is checked, whether the filling degree or filling rate of the buffer exceeds a predetermined threshold. A threshold can e.g. correspond to one subchannel capacity. If the threshold is exceeded, it is moved to step 309, which is the same as in the example described above in greater detail.

The decision on the upgrade of the downlink direction can thus be made e.g. on the basis of the flow control duration or the filling degree or the filling rate of the buffer, and the decision on the downgrade of the downlink direction on the basis of the amount of padding to be transmitted. The difference in the capacity between the connection parts is detected on the basis of the padding, flow control or buffering. As it appears from what is said above, the downlink direction is upgraded, if there are resources available on the air interface and the predetermined upgrade-related conditions for the flow control duration or the filling degree or filling rate of the buffer are fulfilled. The conditions may vary from what is described above, and e.g. at step 308 the duration or the filling rate can be compared to the half of the subchannel capacity, for example. Correspondingly, the downgrade is performed, if the condition set for the amount of padding to be transmitted in advance is fulfilled. At steps 304 and 308 the change values may differ from each other. The condition relating particularly to step 304 is preferably a smallest possible change value of the capacity. This way it is ensured that the downgrade does not cause a need for flow control and/or buffering.

Figure 4 starts with the situation after the call set-up. At step 401, the uplink direction of the connection is monitored. In other words, the output and input channel of the uplink direction are monitored. At step 402 it is checked whether the input channel, i.e. the mobile station, needs a flow control in the example of Figure 4. The need for flow control may indicate that too much capacity on the air interface is allocated. If it is detected at step 402 that the flow control is needed, the duration of the flow control is detected at step 403. Thereafter, the flow control duration is compared with the subchannel capacity at step 404. This way it is found out whether the flow control duration during the measurement period is so long that the channel capacity could be decreased at least by the amount of the smallest stage of change without slowing down or significantly slowing down payload transmission.

If it is detected at step 404 that the duration of the flow control is not equal to the subchannel capacity (i.e. the size of the smallest stage of change), it is returned to step 401 to monitor the uplink direction of the connection.

If it is detected at step 404 that the duration of the flow control is equal to at least the subchannel capacity, the capacity allocated to the connection is decreased by performing the downgrade procedure at step 405. In the second preferred embodiment, one subchannel is downgraded at a time. It would also be possible to downgrade more subchannels at one time, if the duration of the flow control were equal to at least the combined capacity of the subchannels to be "released". For example, if the flow control is active half the time, the channel capacity could be doubled. After the downgrade procedure, it is returned to step 401 to monitor the downlink direction of the connection.

If it is detected at step 402 that flow control is not needed, i.e. that the amount of data needs all capacity, it is checked at step 406 whether padding (fill frames, Receiver Ready frames etc.) is transmitted in the outgoing direction, i.e. the direction of the trunk circuit. The transmission of padding may indicate that too little capacity on the air interface is allocated. If the padding is not transmitted, it is returned from step 406 to step 401 to monitor the uplink direction of the connection.

If it is detected at step 406 that padding is going to the output channel, the amount of the padding transmitted to the trunk circuit is measured at step 407. At step 408, the amount of the padding to be transmitted is compared to the subchannel capacity. In other words, it is checked how much padding is to be transmitted compared to the subchannel capacity. This way it is detected how much padding compared to the smallest stage of change of the capacity the transmission includes. On the basis of the comparison at step 408 it is detected whether in addition to the payload, so much padding is transmitted that the additional channel capacity could be used for data transmission in such a manner that the resources on the air interface are not wasted.

If the condition at step 408 is not fulfilled, it is returned to step 401 to monitor the uplink direction of the connection.

If it is detected at step 408 that the duration of the flow control is equal to at least one subchannel capacity, it is checked at step 409 whether there are resources, i.e. a subchannel or subchannels, available on the air interface. If there are no resources available on the air interface, it is returned to step 401 to monitor the uplink direction of the connection.

If it is detected at step 409 that there are resources available on the air interface, the upgrade is performed at step 410 and a necessary amount of subchannels is allocated. Then it is moved to step 401 to monitor the uplink direction of the connection.

In the embodiments, in which the events indicating the difference in the capacity are the transmission of padding and the buffering of data flow, steps 402, 403 and 404 change in Figure 4. At step 402, the need for buffering is checked. If the buffering is not needed, it is moved to step 406, from which it is proceeded as described above. If the buffering is needed, the filling degree or the filling rate of the data buffer is detected at step 403. At step 404 it is checked, whether the filling degree or filling rate of the buffer exceeds a predetermined threshold. A threshold can e.g. correspond to one subchannel capacity. If the threshold is exceeded, it is moved to step 405, which is the same as in the example described above in greater detail.

The decision on the upgrade of the uplink direction can thus be made e.g. on the basis of the amount of padding to be transmitted and the decision on the downgrade of the uplink direction either on the basis of the flow control duration or the filling degree or the filling rate of the buffer. The difference in the capacity between the connection parts is detected on the basis of the padding, flow control or buffering. As it appears from what is said above, the uplink direction is downgraded, if a predetermined downgrade-related condition for the flow control duration or the filling degree or filling rate of the buffer is fulfilled. Correspondingly, the upgrade is performed, if there is capacity available on the air interface and the condition set for the amount of padding to be transmitted in advance is fulfilled. The conditions may differ from what is described above, and e.g. at step 408 the amount of padding can be compared to the half of the subchannel capacity. At steps 404 and 408 the change values may differ from each other. The condition relating particularly to step 404 is preferably the smallest possible change value of the capacity. This way it is ensured that the downgrade does not cause a need for flow control and/or buffering.

If in the second preferred embodiment a symmetrical allocation is used, it is preferable to combine the functions described in Figures 3 and 4. In such a combined embodiment, the downgrade is only performed if the observation of both the uplink and downlink sides supports the downgrade. If the downgrade allowed by the uplink side is not the same as the downgrade al-lowed by the downlink side, a smaller downgrade procedure is performed with the smaller allowed downgrade.

In such a combined embodiment, the upgrade is performed if the observation of either side enables the upgrade and there is capacity available. The upgrade level is equal to the amount indicated by the observation.

The steps described above in Figures 3 and 4 are not in an absolute chronological order and part of the steps can be carried out simultaneously or as differing from the described order. Between the steps, other functions can be performed as well. The conditions for the upgrade and downgrade procedures may also differ from what is described above. The conditions may also vary according to the allocation situation of the data transmission resource (i.e. the air interface resource). For example, if all resources are allocated, a condition can be set for the downgrade procedure, the condition equalling e.g. half of the lowest possible change value of the capacity. If there are resources available, a stricter condition allowing the downgrade procedure may be used. It is essential that the real transmission rates of both connection parts, or the efficiency of the allocated transmission capacity, are compared to each other. When the comparison is made both in uplink and downlink directions, also when using the asymmetrical allocation, the optimal use of resources on the air interface of both directions is ensured.

If the mobile station requests more channel capacity (e.g. the UIMI/Modify function of the GSM, User Initiated Modification Indication), the network may utilize the prevailing capacity of the trunk circuit estimated on the basis of the functions of the invention and restrict the channel capacity of the mobile station to correspond to the situation of the trunk circuit.

It is obvious for a person skilled in the art that as the technology develops, the basic idea of the invention can be implemented in various ways. The invention and the embodiments thereof are thus not restricted to the examples described above, but they may vary within the scope of the claims in systems based on both a fixed network and wireless data transmission.

## Claims

1. A method for optimizing the use of data transmission resources between terminals in a telecommunication system and a network element in a telecommunication system, which method comprises the steps of:
forming an end-to-end connection between the terminal in the telecommunication system and the other party of the connection, which connection comprises the first connection part between the terminal and the network element and the second connection part between the network element and the other party,
**characterized by**
detecting (302, 306, 402, 406) a difference in the capacity between the connection parts, and
changing (305, 310, 405, 410, 2-5, 2-10A) the capacity allocated to the first connection part from said data transmission resources in such a manner that the difference in the capacity between the connection parts decreases.

2. A method as claimed in claim 1, **characterized by** the method further comprising:
(a) monitoring the connection (301, 401),
(b) detecting an event indicating the difference in the capacity between the connection parts during the monitoring (302, 306, 402, 406),
(c) defining an extent of the event (303, 307, 403, 407) by which the difference between the connection parts can be concluded,,
(d) checking whether the extent of the event fulfils a predetermined condition (304, 308, 404, 408), and
(e) only if the condition is fulfilled, changing the capacity allocated to the first connection part from said data transmission resources in such a manner that the difference in the capacity between the connection parts decreases (305, 310, 405, 410).

3. A method as claimed in claim 2, **characterized by** performing the steps (a) to (e) separately for the uplink and the downlink direction of the connection.

4. A method as claimed in claim 2, **characterized by**
performing the steps (a) to (d) separately for the uplink and the downlink direction of the connection, and
upgrading said allocated capacity, if the extent of the event of either direction fulfils the predetermined condition.

5. A method as claimed in claim 2 or 4, **characterized by**
performing the steps (a) to (d) separately for the uplink and the downlink direction of the connection, and
downgrading said allocated capacity, if the condition relating to the downgrade is fulfilled in both directions.

6. A method as claimed in claim 5, **characterized by** downgrading by the amount of a smaller downgrade allowed, if the downgrade allowed by the uplink side is not the same as the downgrade allowed by the downlink side.

7. A method as claimed in any one of the preceding claims, **characterized by** the event indicating the difference in the capacity being the transmission of padding, and its extent being defined by measuring the amount of the padding to be transmitted.

8. A method as claimed in any one of the preceding claims, **characterized by** the event indicating the difference in the capacity being the need for flow control, and its extent being defined by detecting the duration of the flow control.

9. A method as claimed in any one of the preceding claims 1 to 7, **characterized by** the event indicating the difference in the capacity being buffering, and its extent being defined by detecting the filling degree or filling rate of the buffer.

10. A method as claimed in any one of the preceding claims, **characterized by** the event indicating the difference in the capacity being the information received from the other connection part on its capacity, and its extent being defined on the basis of the difference in the capacity expressed by the information.

11. A method as claimed in any one of the preceding claims, **characterized by** the telecommunication system being a mobile communication system, and the data transmission resources being resources on the air interface.

12. A method as claimed in claim 1, wherein
the terminal is a mobile station,
the telecommunications system comprises a mobile network,
the first connection part comprises a first leg between the mobile station and the mobile communication network, and
the second connection part comprises a second leg between the mobile communication network and the other party,
**characterized by** the method further comprising
maintaining information on the capacity allocated to the first leg on the air interface (2-1, 2-10A, 2-11),
receiving the information on the capacity of the second leg (2-4, 2-9A, 2-9B, 2-14),
comparing the capacities with each other, and
if the capacities differ from each other, changing the capacity on the air interface of the first leg to correspond to the capacity of the second leg (2-5,2-10A).

13. A method as claimed in claim 12, **characterized by** transmitting the information on the capacity change of the first leg to the second leg (2-12).

14. A method as claimed in claim 12 or 13, **characterized by**
transmitting the information on the intention to change the capacity of the first leg to the second leg (2-7),
receiving the information from the second leg whether it is capable of changing its capacity (2-9A, 2-9B), and
changing the capacity of the first leg (2-10A), if the second leg is capable of changing its capacity (2-10A).

15. A method as claimed in claim 12, 13 or 14, **characterized by**
receiving the information from the second leg on the intention to upgrade the capacity of the second leg (2-7),
checking the available capacity (2-8), and
if there is at least a predetermined minimum amount of capacity available, transmitting the information to the second leg that the capacity can be upgraded (2-9A), or
if there is not a predetermined minimum amount of capacity available, transmitting the information to the second leg that the capacity is not allowed to be upgraded (2-9B).

16. A mobile communication system comprising
the first mobile station (MS A) and the second mobile station (MS B),
a mobile communication network (GSM) to establish and maintain a connection between said mobile stations,
an air interface (Air) between the mobile stations (MS A, MS B) and the mobile communication network (GSM), and
the mobile communication network comprising the first network element (MSC 1, IWU) to form the first leg of the connection between the first mobile station (MS A) and the first network element and to allocate capacity to the first leg from the air interface, and the second network element (MSC 2, IWU) to form the second leg between the second mobile station (MS A) and the second network element and to allocate capacity to the second leg from the air interface,
**characterized in that**
the first network element (MSC 1, IWU) is arranged to maintain information on the capacity allocated to the first leg from the air interface, receive information on the capacity of the second leg, compare the capacities with each other and change the capacity of the first leg to correspond to that of the second leg in response to the difference between the capacities, and
the second network element (MSC 2, IWU) is arranged to transmit information to the first network element on the capacity of the second leg.

17. A mobile communication system as claimed in claim 16, **characterized in that** the second network element (MSC 2, IWU) is arranged to transmit information on the capacity of the second leg to the first network element in response to the capacity change of the second leg.

18. A mobile communication system as claimed in claim 16 or 17, **characterized in that** the first network element (MSC 1, IWU) is arranged to inquire of the second network element (MSC 2, IWU) whether the capacity of the second leg can be changed, receive the response to the inquiry and change the capacity of the first leg only if the capacity of the second network element can be changed, and
the second network element is arranged to receive the inquiry about the possibility to change the capacity of the second leg and to transmit information to the first network element on the possibilities to change the capacity of the second leg in response to the inquiry about the possibility of change.

19. A mobile communication system as claimed in claim 16, 17 or 18, **characterized in that** the first network element and the second network element are the same network element (MSC, IWU), which is arranged to convey information on the capacity of the first and the second leg as an internal information of the network element.

20. An interworking unit (IWU) of the telecommunication network, **characterized in that** it is arranged to monitor the connection between the terminal in connection with the telecommunication network and the second party, detect an event indicating the difference in the capacity between the first connection part between the terminal and the interworking unit and the second connection part between the second party and the interworking unit, define an extent of the event by which the difference between the connection parts can be concluded and change the capacity allocated to the connection from the data transmission resources between the telecommunication network and the terminals, if the extent of the event fulfils the predetermined condition.

21. An interworking unit (IWU) as claimed in claim 20, **characterized in that** it is arranged to monitor, detect, define and change said allocated capacity separately to the uplink and the downlink direction of the connection.

22. An interworking unit (IWU) as claimed in claim 20, **characterized in that** it is arranged to monitor, detect and define the uplink and the downlink direction of the connection separately and increase said allocated capacity if the condition relating to the upgrade of the capacity is fulfilled in either direction and decrease the capacity on the air interface only if the condition relating to the downgrade of the capacity is fulfilled in both directions.

23. An interworking unit (IWU) as claimed in claim 20, 21 or 22, **characterized in that** it is an interworking unit of the mobile communication network and the data transmission resources are resources on the air interface.

## Patentansprüche

1. Verfahren zum Optimieren der Nutzung von Datenübertragungsressourcen zwischen Endgeräten in einem Telekommunikationssystem und einem Netzwerkelement in einem Telekommunikationssystem, wobei das Verfahren die Schritte umfasst:
- Bilden einer durchgehenden Verbindung zwischen dem Endgerät in dem Telekommunikationssystem und der anderen Partei der Verbindung, wobei die Verbindung den ersten Verbindungsteil zwischen dem Endgerät und dem Netzwerkelement und den zweiten Verbindungsteil zwischen dem Netzwerkelement und der anderen Partei umfasst,
**gekennzeichnet durch**
- Erfassen (302, 306, 402, 406) eines Kapazitätsunterschieds zwischen den Verbindungsteilen, und
- Ändern (305, 310, 405, 410, 2-5, 2-10A) der Kapazität, die dem ersten Verbindungsteil von den Datenübertragungsressourcen zugewiesen wird, in solch einer Weise, dass der Kapazitätsunterschied zwischen den Verbindungsteilen abnimmt.

2. Verfahren nach Anspruch 1, **dadurch gekennzeichnet, dass** das Verfahren weiterhin umfasst:
(a) Überwachen der Verbindung (301, 401),
(b) Erfassen eines Ereignisses, das den Kapazitätsunterschied zwischen den Verbindungsteilen während des Überwachens (302, 306, 402, 406) anzeigt,
(c) Definieren eines Maßes des Ereignisses (303, 307, 403, 407), woraus der Unterschied zwischen den Verbindungsteilen gefolgert werden kann,
(d) Überprüfen ob das Maß des Ereignisses eine vorherbestimmte Bedingung (304, 308, 404, 408) erfüllt, und
(e) nur wenn die Bedingung erfüllt wird, Ändern der Kapazität, die dem ersten Verbindungsteil von den Datenübertragungsressourcen zugewiesen wird, in solch einer Weise, dass der Kapazitätsunterschied zwischen den Verbindungsteile abnimmt (305, 310, 405, 410).

3. Verfahren nach Anspruch 2, **gekennzeichnet durch** ein Ausführen der Schritte (a) bis (e) in getrennter Weise für die Aufwärts- und Abwärtsrichtung der Verbindung.

4. Verfahren nach Anspruch 2, **gekennzeichnet durch** ein Ausführen der Schritte (a) bis (d) in getrennter Weise für die Aufwärts- und Abwärtsrichtung der Verbindung, und ein Aufstocken der zugewiesenen Kapazität, falls das Maß des Ereignisses von einer der Richtungen die vorherbestimmte Bedingung erfüllt.

5. Verfahren nach den Ansprüchen 2 oder 4, **gekennzeichnet durch** ein Ausführen der Schritte (a) bis (d) in getrennter Weise für die Aufwärts- und Abwärtsrichtung der Verbindung, und Zurückstufen der zugewiesenen Kapazität, falls die Bedingung, die die Zurückstufung betrifft, in beiden Richtungen erfüllt wird.

6. Verfahren nach Anspruch 5, **gekennzeichnet durch** ein Zurückstufen um den Betrag einer kleineren erlaubten Zurückstufung, falls die Zurückstufung, die **durch** die Aufwärtsseite erlaubt ist, nicht dieselbe ist, wie die Zurückstufung, die von der Abwärtsseite erlaubt ist.

7. Verfahren gemäß irgendeinem der vorherigen Ansprüche, **dadurch gekennzeichnet, dass** das Ereignis, das den Kapazitätsunterschied anzeigt, die Übertragung von Füllzeichen ist, dessen Maß durch Messen der Menge an Füllzeichen definiert wird, die übertragen werden soll.

8. Verfahren gemäß irgendeinem der vorhergehenden Ansprüche, **dadurch gekennzeichnet, dass** das Ereignis, das den Kapazitätsunterschied anzeigt, der Bedarf an Flusssteuerung ist, und dessen Maß durch ein Erfassen der Dauer des Flusssteuerung definiert wird.

9. Verfahren gemäß irgendeinem der vorhergehenden Ansprüche 1 bis 7, **dadurch gekennzeichnet, dass** das Ereignis, das den Kapazitätsunterschied anzeigt, Puffern ist, und dessen Maß durch ein Erfassen des Füllgrades oder der Füllrate des Puffers definiert wird.

10. Verfahren gemäß irgendeinem der vorhergehenden Ansprüche, **dadurch gekennzeichnet, dass** das Ereignis, das den Kapazitätsunterschied anzeigt, die Information ist, die von dem anderen Verbindungsteil über seine Kapazität empfangen wird, und dessen Maß auf der Basis des Kapazitätsunterschiedes definiert wird, der durch die Information ausgedrückt wird.

11. Verfahren gemäß irgendeinem der vorhergehenden Ansprüche, **dadurch gekennzeichnet, dass** das Telekommunikationssystem ein Mobilkommunikationssystem ist, und die Datenübertragungsressourcen Ressourcen auf der Funkschnittstelle sind.

12. Verfahren nach Anspruch 1, wobei
- das Endgerät eine Mobilstation ist,
- das Telekommunikationssystem ein Mobilnetzwerk umfasst,
- der erste Verbindungsteil einen ersten Abschnitt zwischen der Mobilstation und dem Mobilkommunikationsnetzwerk umfasst, und
- der zweite Verbindungsteil einen zweiten Abschnitt zwischen dem Mobilkommunikationsnetzwerk und der anderen Partei umfasst,
**dadurch gekennzeichnet, dass** das Verfahren weiter umfasst:
- Aufrechterhalten von Information über die Kapazität, die dem ersten Abschnitt auf der Funkschnittstelle (2-1, 2-10A, 2-11) zugewiesen ist,
- Empfangen der Information über die Kapazität des zweiten Abschnitts (2-4, 2-9A, 2-9B, 2-14),
- Vergleichen der Kapazitäten miteinander, und
- falls die Kapazitäten sich voneinander unterscheiden, Ändern der Kapazität des ersten Abschnitts auf der Funkschnittstelle, um der Kapazität des zweiten Abschnitts (2-5, 2-10A) zu entsprechen.

13. Verfahren nach Anspruch 12, **gekennzeichnet durch** ein Übertragen der Information über die Änderung der Kapazität des ersten Abschnitts an den zweiten Abschnitt (2-12).

14. Verfahren nach den Ansprüchen 12 oder 13, **gekennzeichnet durch:**
- Übertragen der Information über die Absicht, die Kapazität des ersten Abschnitts zu ändern, an den zweiten Abschnitt (2-7),
- Empfangen der Information von dem zweiten Abschnitt, ob er im Stande ist, seine Kapazität zu ändern (2-9A, 2-9B), und
- Ändern der Kapazität des ersten Abschnitts (2-10A), falls der zweite Abschnitt fähig ist, seine Kapazität zu ändern (2-10A).

15. Verfahren nach den Ansprüchen 12, 13 oder 14, **gekennzeichnet durch**:
- Empfangen der Information von dem zweiten Abschnitt über die Absicht, die Kapazität des zweiten Abschnitts aufzustocken (2-7),
- Überprüfen der verfügbaren Kapazität (2-8), und
- falls mindestens ein vorherbestimmter minimaler Betrag an Kapazität verfügbar ist, Übertragen der Information an den zweiten Abschnitt, dass die Kapazität aufgestockt werden kann (2-9A), oder
- falls kein vorherbestimmter minimaler Betrag an Kapazität verfügbar ist, Übertragen der Information an den zweiten Abschnitt, dass nicht erlaubt wird, die Kapazität aufgestockt zu werden (2-9B).

16. Mobilkommunikationssystem, umfassend:
- die erste Mobilstation (MS A) und die zweite Mobilstation (MS B),
- ein Mobilkommunikationsnetzwerk (GSM), um eine Verbindung zwischen den Mobilstationen aufzubauen und aufrechtzuerhalten,
- eine Funkschnittstelle (Air) zwischen den Mobilstationen (MS A, MS B) und dem Mobilkommunikationsnetzwerk (GSM), und
- das Mobilkommunikationsnetzwerk, umfassend das erste Netzwerkelement (MSC 1, IWU), um den ersten Abschnitt der Verbindung zwischen der ersten Mobilstation (MS A) und dem ersten Netzwerkelement zu bilden, und um dem ersten Abschnitt Kapazität von der Funkschnittstelle zuzuweisen, und das zweite Netzwerkelement (MSC 2, IWU), um den zweiten Abschnitt zwischen der zweiten Mobilstation (MS A) und dem zweiten Netzwerkelement zu bilden, und um dem zweiten Abschnitt Kapazität von der Funkschnittstelle zuzuweisen,
**dadurch gekennzeichnet, dass**
- das erste Netzwerkelement (MSC 1, IWU) angeordnet ist, um Information über die Kapazität aufrechtzuerhalten, die dem ersten Abschnitt von der Funkschnittstelle zugewiesen wird, um Information über die Kapazität des zweiten Abschnitts zu empfangen, um die Kapazitäten miteinander zu vergleichen, und um die Kapazität des ersten Abschnitts zu ändern, um der des zweiten Abschnitts zu entsprechen, in Reaktion auf den Unterschied zwischen den Kapazitäten, und
- das zweite Netzwerkelement (MSC 2, IWU) angeordnet ist, um Information über die Kapazität des zweiten Abschnitts zu dem ersten Netzwerkelement zu übertragen.

17. Mobilkommunikationssystem nach Anspruch 16, **dadurch gekennzeichnet, dass** das zweite Netzwerkelement (MSC 2, IWU) angeordnet ist, um Information über die Kapazität des zweiten Abschnitts zu dem ersten Netzwerkelement zu übertragen, in Reaktion auf die Änderung der Kapazität des zweiten Abschnitts.

18. Mobilkommunikationssystem nach den Ansprüchen 16 oder 17, **dadurch gekennzeichnet, dass**
- das erste Netzwerkelement (MSC 1, IWU) angeordnet ist, um das zweite Netzwerkelement (MSC 2, IWU) abzufragen, ob die Kapazität des zweiten Abschnitts geändert werden kann, um die Antwort auf die Abfrage zu empfangen, und um die Kapazität des ersten Abschnitts nur zu ändern, falls die Kapazität des zweiten Netzwerkelements geändert werden kann, und
- das zweite Netzwerkelement angeordnet ist, um die Abfrage über die Möglichkeit, die Kapazität des zweiten Abschnitts zu ändern, zu empfangen, und um in Reaktion auf die Abfrage über die Möglichkeit des Änderns Information über die Möglichkeiten, die Kapazität des zweiten Abschnitts zu ändern, an das erste Netzwerkelement zu übertragen.

19. Mobilkommunikationssystem nach den Ansprüchen 16, 17 oder 18 **dadurch gekennzeichnet, dass** das erste Netzwerkelement und das zweite Netzwerkelement dasselbe Netzwerkelement (MSC, IWU) sind, welches angeordnet ist, um Information über die Kapazität des ersten und des zweiten Abschnitts als eine interne Information des Netzwerkelements zu übermitteln.

20. Übergangseinheit (IWU) des Telekommunikationsnetzwerks, **dadurch gekennzeichnet, dass** sie angeordnet ist, um die Verbindung zwischen dem Endgerät in Verbindung mit dem Telekommunikationsnetzwerk und der zweiten Partei zu überwachen, um ein Ereignis zu erfassen, das den Kapazitätsunterschied zwischen dem ersten Verbindungsteil zwischen dem Endgerät und der Übergangseinheit und dem zweiten Verbindungsteil zwischen der zweiten Partei und der Übergangseinheit anzeigt, um ein Maß des Ereignisses zu definieren, durch welches der Unterschied zwischen den Verbindungsteilen gefolgert werden kann, und um die Kapazität zu ändern, die der Verbindung von den Datenübertragungsressourcen zwischen dem Telekommunikationsnetzwerk und den Endgeräten zugewiesen ist, falls das Maß des Ereignisses die vorherbestimmte Bedingung erfüllt.

21. Übergangseinheit (IWU) nach Anspruch 20, **dadurch gekennzeichnet, dass** sie angeordnet ist, um die zugewiesene Kapazität in getrennter Weise für die Aufwärts- und Abwärtsrichtung der Verbindung zu überwachen, zu erfassen, zu definieren und zu ändern.

22. Übergangseinheit (IWU) nach Anspruch 20, **dadurch gekennzeichnet, dass** sie angeordnet ist, um die Aufwärts- und Abwärtsrichtung der Verbindung in getrennter Weise zu überwachen, zu erfassen und zu definieren und die zugewiesene Kapazität zu erhöhen, falls die Bedingung, die das Aufstocken der Kapazität betrifft, in jeder Richtung erfüllt ist, und um die Kapazität auf der Funkschnittstelle nur zu verringern, falls die Bedingung, die das Herabstufen der Kapazität betrifft, in beiden Richtungen erfüllt ist.

23. Übergangseinheit (IWU) nach den Ansprüche 20, 21 oder 22, **dadurch gekennzeichnet, dass** sie eine Übergangseinheit des Mobilkommunikationsnetzwerks ist, und die Datenübertragungsressourcen Ressourcen auf der Funkschnittstelle sind.

## Revendications

1. Procédé permettant d'optimiser l'utilisation de ressources de transmission de données entre les terminaux d'un système de télécommunication et un élément de réseau dans un système de télécommunication, le procédé comprenant les étapes consistant à :
établir une connexion de bout en bout entre le terminal dans le système de télécommunication et l'autre correspondant de la connexion, la connexion comprenant la première partie de connexion entre le terminal et l'élément de réseau et la deuxième partie de connexion entre l'élément de réseau et l'autre correspondant,
**caractérisé par** les étapes consistant à
détecter (302, 306, 402, 406) une différence de capacité entre les parties de connexion ; et
changer (305, 310, 405, 410, 2-5, 2-10A) la capacité allouée à la première partie de connexion à partir desdites ressources de transmission de données de telle manière que la différence de capacité entre les parties de connexion diminue.

2. Procédé selon la revendication 1, **caractérisé en ce que** le procédé comprend en outre les étapes consistant à :
(a) surveiller la connexion (301, 401) ;
(b) détecter un événement indiquant la différence de capacité entre les parties de connexion pendant la surveillance (302, 306, 402, 406) ;
(c) définir une extension de l'événement (303, 307, 403, 407) dont on peut conclure la différence entre les parties de connexion ;
(d) vérifier si l'extension de l'événement remplit une condition prédéterminée (304, 308, 404, 408) ; et
(e) seulement si la condition est remplie, changer la capacité allouée à la première partie de connexion à partir desdites ressources de transmission de données de telle manière que la différence de capacité entre les parties de connexion diminue (305, 310, 405, 410).

3. Procédé selon la revendication 2, **caractérisé en ce que** les étapes (a) à (e) sont effectuées séparément pour la direction de liaison montante et de liaison descendante de la connexion.

4. Procédé selon la revendication 2, **caractérisé en ce que** les étapes (a) à (d) sont effectuées séparément pour la direction de liaison montante et de liaison descendante de la connexion ; et
mettre à niveau ladite capacité allouée, si l'extension de l'événement d'une des directions remplit la condition prédéterminée.

5. Procédé selon la revendication 2 ou 4, **caractérisé en ce que** les étapes (a) à (d) sont effectuées séparément pour la direction de liaison montante et de liaison descendante de la connexion ; et
dégrader ladite capacité allouée, si la condition liée à la dégradation est remplie dans les deux directions.

6. Procédé selon la revendication 5, **caractérisé par** une dégradation de la quantité d'une dégradation plus petite permise, si la dégradation permise par le côté de liaison montante n'est pas la même que la dégradation permise par le côté de liaison descendante.

7. Procédé selon l'une quelconque des revendications précédentes, **caractérisé en ce que** l'événement indiquant la différence de capacité est la transmission de remplissage, et son extension est définie en mesurant la quantité de remplissage à transmettre.

8. Procédé selon l'une quelconque des revendications précédentes,
**caractérisé en ce que** l'événement indiquant la différence de capacité est la nécessité d'une commande de flux, et son extension est définie en détectant la durée de la commande de flux.

9. Procédé selon l'une quelconque des revendications précédentes 1 à 7, **caractérisé en ce que** l'événement indiquant la différence de capacité est un tamponnement, et son extension est définie en détectant le degré de remplissage ou du taux de remplissage du tampon.

10. Procédé selon l'une quelconque des revendications précédentes, **caractérisé en ce que** l'événement indiquant la différence de capacité est l'information reçue de l'autre partie de connexion concernant sa capacité, et son extension est définie sur la base de la différence de capacité exprimée par l'information.

11. Procédé selon l'une quelconque des revendications précédentes, **caractérisé en ce que** le système de télécommunication est un système de communication mobile, et les ressources de transmission de données sont des ressources sur l'interface aérienne.

12. Procédé selon la revendication 1, dans lequel
le terminal est une station mobile ;
le système de télécommunication comprend un réseau mobile ;
la première partie de connexion comprend un premier tronçon entre la station mobile et le réseau de communication mobile ; et
la deuxième partie de connexion comprend un deuxième tronçon entre le réseau de communication mobile et l'autre correspondant,
**caractérisé en ce que** le procédé comprend en outre les étapes consistant à
entretenir des informations concernant la capacité allouée au premier tronçon sur l'interface aérienne (2-1, 2-10A, 2-11) ;
recevoir les informations concernant la capacité du deuxième tronçon (2-4, 2-9A, 2-9B, 2-14);
comparer les capacités l'une à l'autre ; et
si les capacités sont différentes l'une de l'autre, changer la capacité sur l'interface aérienne du premier tronçon pour qu'elle corresponde à la capacité du deuxième tronçon (2-5, 2-10A).

13. Procédé selon la revendication 12, **caractérisé par** la transmission au deuxième tronçon (2-12) des informations concernant le changement de capacité du premier tronçon.

14. Procédé selon la revendication 12 ou 13, **caractérisé par** les étapes consistant à
transmettre au deuxième tronçon (2-7) les informations concernant l'intention de changer la capacité du premier tronçon ;
recevoir les informations du deuxième tronçon pour savoir s'il est capable de changer sa capacité (2-9A, 2-9B) ; et
changer la capacité du premier tronçon (2-10A), si le deuxième tronçon est capable de changer sa capacité (2-10A).

15. Procédé selon la revendication 12, 13 ou 14, **caractérisé par** les étapes consistant à
recevoir les informations du deuxième tronçon concernant l'intention de mettre à niveau la capacité du deuxième tronçon (2-7) ;
vérifier la capacité disponible (2-8) ; et
s'il existe au moins une quantité minimale prédéterminée de capacité disponible, transmettre les informations au deuxième tronçon que la capacité peut être mise à niveau (2-9A) ; ou
s'il n'existe pas de quantité minimale prédéterminée de capacité disponible, transmettre les informations au deuxième tronçon que la capacité ne peut pas être mise à niveau (2-9B).

16. Système de communication mobile, comprenant
la première station mobile (MS A) et la deuxième station mobile (MS B) ;
un réseau de communication mobile (GSM) pour établir et maintenir une connexion entre lesdites stations mobiles ;
une interface aérienne (Air) entre les stations mobiles (MS A, MS B) et le réseau de communication mobile (GSM) ; et
le réseau de communication mobile comprenant le premier élément de réseau (MSC 1, IWU) pour établir le premier tronçon de la connexion entre la première station mobile (MS A) et le premier élément de réseau et allouer une capacité au premier tronçon à partir de l'interface aérienne, et le deuxième élément de réseau (MSC 2, IWU) pour établir le deuxième tronçon entre la deuxième station mobile (MS A) et le deuxième élément de réseau et allouer une capacité au deuxième tronçon à partir de l'interface aérienne,
**caractérisé en ce que**
le premier élément de réseau (MSC 1, IWU) est agencé pour entretenir des informations concernant la capacité allouée au premier tronçon à partir de l'interface aérienne, recevoir des informations concernant la capacité du deuxième tronçon, comparer les capacités l'une à l'autre et changer la capacité du premier tronçon pour qu'elle corresponde à celle du deuxième tronçon en réponse à la différence entre les capacités ; et
le deuxième élément de réseau (MSC 2, IWU) est agencé pour transmettre des informations au premier élément de réseau concernant la capacité du deuxième tronçon.

17. Système de communication mobile selon la revendication 16, **caractérisé en ce que** le deuxième élément de réseau (MSC 2, IWU) est agencé pour transmettre des informations concernant la capacité du deuxième tronçon au premier élément de réseau en réponse au changement de capacité du deuxième tronçon.

18. Système de communication mobile selon la revendication 16 ou 17, **caractérisé en ce que** le premier élément de réseau (MSC 1, IWU) est agencé pour demander au deuxième élément de réseau (MSC 2, IWU) si la capacité du deuxième tronçon peut être modifiée, recevoir la réponse à la demande et changer la capacité du premier tronçon seulement si la capacité du deuxième élément de réseau peut être modifiée ; et
le deuxième élément de réseau est agencé pour recevoir la demande concernant la possibilité de changer la capacité du deuxième tronçon et transmettre des informations au premier élément de réseau concernant les possibilités de changement de la capacité du deuxième tronçon en réponse à la demande concernant la possibilité de changement.

19. Système de communication mobile selon la revendication 16, 17 ou 18, **caractérisé en ce que** le premier élément de réseau et le deuxième élément de réseau correspondent au même élément de réseau (MSC, IWU) qui est agencé pour transporter des informations concernant la capacité des premier et deuxième tronçons comme des informations internes de l'élément de réseau.

20. Unité d'interfonctionnement (IWU) du réseau de télécommunication, **caractérisée en ce qu'**elle est agencée pour surveiller la connexion entre le terminal en communication avec le réseau de télécommunication et le deuxième correspondant, détecter un événement indiquant la différence de capacité entre la première partie de connexion entre le terminal et l'unité d'interfonctionnement et la deuxième partie de connexion entre le deuxième correspondant et l'unité d'interfonctionnement, définir une extension de l'événement dont on peut conclure la différence entre les parties de connexion et changer la capacité allouée à la connexion à partir des ressources de transmission de données entre le réseau de télécommunication et les terminaux, si l'extension de l'événement remplit la condition prédéterminée.

21. Unité d'interfonctionnement (IWU) selon la revendication 20, **caractérisée en ce qu'**elle est agencée pour surveiller, détecter, définir et changer ladite capacité allouée séparément dans la direction de liaison montante et de liaison descendante de la connexion.

22. Unité d'interfonctionnement (IWU) selon la revendication 20, **caractérisée en ce qu'**elle est agencée pour surveiller, détecter et définir la direction de liaison montante et de liaison descendante de la connexion séparément et augmenter ladite capacité allouée si la condition liée à la mise à niveau de la capacité est remplie dans l'une des directions et diminuer la capacité sur l'interface aérienne seulement si la condition liée à la dégradation de la capacité est remplie dans les deux directions.

23. Unité d'interfonctionnement (IWU) selon la revendication 20, 21 ou 22, **caractérisée en ce qu'**il s'agit d'une unité d'interfonctionnement du réseau de communication mobile et que les ressources de transmission de données sont des ressources sur l'interface aérienne.
